# EUROPÄISCHE PATENTSCHRIFT

(11) **EP 0 718 782 B1**
(45) Veröffentlichungstag und Bekanntmachung des Hinweises auf die Patenterteilung: **19.07.2000**
(21) Anmeldenummer: 95119649.2
(22) Anmeldetag: 13.12.1995
(51) Int. Cl.: G06F 15/17

(54) **Verfahren zur Verbindung zweier unterschiedlicher Rechnersysteme**
Method for connecting two different computersystems
Méthode pour connecter deux ordinateurs différents

(30) Priorität: 23.12.1994 DE 4446354
(43) Veröffentlichungstag der Anmeldung: 26.06.1996
(73) Patentinhaber: SIEMENS AKTIENGESELLSCHAFT, 80333 München (DE)
(72) Erfinder: Distler, Georg, D-91341 Röttenbach (DE); Mikula, Bernd, Dipl.-Ing., D-91088 Bubenreuth (DE); Schneider, Gerhard, Dipl.-Phys., D-91056 Erlangen (DE)

(56) Entgegenhaltungen:
- US-A- 4 799 150
- IBM TECHNICAL DISCLOSURE BULLETIN, Bd. 28, Nr. 3, August 1985, NEW YORK, US, Seiten 1240-1243, XP002001682 ANONYMOUS: "Software Package for a Pc/Host Cooperative Environment"
- IBM TECHNICAL DISCLOSURE BULLETIN, Bd. 35, Nr. 6, November 1992, NEW YORK, US, Seiten 448-451, XP002001683 ANONYMOUS: "Fixed Disk Sharing via Small Computer System Interface Device Emulation through Compatibility BIOS."
- VMEBUS IN PHYSICS CONFERENCE, 7.Oktober 1985, CERN , GENEVA, SWITZERLAND, Seiten 291-296, XP002001684 ALEXANDER: "A VME interface to an IBM mainframe computer"
- IBM TECHNICAL DISCLOSURE BULLETIN, Bd. 28, Nr. 9, Februar 1986, NEW YORK , USA, Seiten 4014-4016, XP002001685 "Interface between a host computer and an i/o processor in a multiprocessor system"

## Beschreibung

Die Erfindung bezieht sich auf ein Verfahren zur Anbindung eines Personalcomputers an einen Mehrarbeitsplatzrechner der mittleren Datentechnik mit File-Transfer zwischen diesen beiden Systemen.

Vor allem ältere Mehrarbeitsplatz-Rechnersysteme der mittleren Datentechnik vorzugsweise aus den siebziger Jahren entsprechen zumeist nicht mehr den heute gültigen Standards und lassen sich aufgrund ihrer spezifischen Eigenschaften teilweise nur schwer oder auch gar nicht durch aktuellere Rechnersysteme ersetzen. Da häufig die Konfiguration der bestehenden Anlagen nicht mehr geändert werden kann, weil hierzu zumeist das Betriebssystem neu erzeugt werden müßte, anschließend alle Anwenderprogramme in der richtigen Art und Weise neu geladen werden müssen und eventuell Korrekturen eingebracht werden müssen, das dazu notwendige Wissen jedoch aufgrund von Mitarbeiterfluktuation im Laufe der Zeit nicht mehr vorhanden ist, besteht daher der Wunsch, die auf den alten Systemen erfaßten und gespeicherten Daten mit anderen Systemen auszutauschen. Darüber hinaus soll der vorhandene Datenbestand mit modernen Standardmitteln wie Tabellenkalkulation und graphischer Veranschaulichung von Daten unter den weitverbreiteten Betriebssystemen DOS und WINDOWS bearbeitet werden können. Außerdem soll der alte, unzuverlässige, wartungsintensive und von den Ausmaßen sehr große Massenplattenspeicher durch günstigen Massenplattenspeicher auf Personalcomputersystemen ersetzt werden. Ein solches System stellt beispielsweise der SICOMP-R-Rechner dar, ein Rechnersystem der mittleren Datentechnik der Firma Siemens, welches weder in Software noch Hardware den gängigen Standards entspricht.

Es ist bekannt, daß zur Erfüllung einer solchen Anforderung bisher die Möglichkeit bestand, mit sogenannten Terminal-Emulationen auf Personalcomputer-Basis Datensichtgeräte von Mehrarbeitsplatz-Systemen zu ersetzen. Solche Terminal-Emulationen werden an seriellen Schnittstellen des mittleren Datensystemes angeschlossen. Da die Transferrate dieser seriellen Schnittstellen jedoch maximal 9600 Baud, somit ca. 1000 pro Sekunde, beträgt, ist ein Datenaustausch zwischen mittlerem Datensystem und Personalcomputersystem durch File-Transfer zwar möglich, jedoch sehr langsam. Aufgrund dieser geringen Datenübertragungsrate läßt sich eine intensive Nutzung des externen Personalcomputer-Massenplattenspeichers, welcher ein hohes Datenvolumen beinhaltet, mit einer Terminal-Emulation nicht realisieren. Darüber hinaus besteht die Anforderung, nicht lediglich von der Personalcomputerseite auf das Mehrarbeitsplatz-System zugreifen zu können, sondern auch umgekehrt. Dies ist jedoch mit einer einfachen Terminal-Emulation auf Personalcomputer-Basis nicht zu erreichen.

IBM Technical Disclosure Bulletin, Bd. 28, Nr.3, August 1985, New York, US, Seiten 1240-1243 beschreibt, daß ein Hostcomputer Plattenspeicher eines Personalcomputers emuliert, wobei der Personalcomputer die große Plattenspeicherkapazität des Hostcomputers nutzen kann. Software auf dem Hostcomputer empfängt dazu Anforderungen von eigener Treibersoftware des Personalcomputers.

US-A-4,799,150 beschreibt eine Schnittstellenschaltung zwischen einem Hostcomputer and einem Peripherieprozessor, die in einem Normalmodus unabhängig voneinander arbeiten und in einem Ein-/Ausgabemodus miteinander kommunizieren. Ein Adreßdetektor der Schnittstellenschaltung erkennt bestimmte Befehlsadressen, die vom Peripherieprozessor aus aktiviert werden, um so einen Normalmodus zu beenden und den Ein-/Ausgabemodus zu starten.

Der Erfindung liegt daher die Aufgabe zugrunde, ein Verfahren zur Anbindung eines Mehrarbeitsplatz-Rechners der mittleren Datentechnik an einen Personalcomputer so auszugestalten, daß eine Kommunikation mit ausreichend hoher Datenübertragungsrate zwischen den beiden Systemen ermöglicht wird. Gleichzeitig sollen alte, unzuverlässige, wartungsintensive und großvolumige Plattenspeicher durch günstige Massenplattenspeicher des Personalcomputers ersetzt werden. Um möglichst wenig in vorhandene Mehrarbeitsplatz-Systeme eingreifen zu müssen, sollen auf Seite des mittleren Datensystems so wenige Änderungen an Software oder Hardware vorgenommen werden wie möglich.

Gemäß der Erfindung wird diese Aufgabe durch folgende Merkmale gelöst:
- Der Personalcomputer emuliert einen Standardplattenspeicher und/oder Diskettenspeicher des Mehrarbeitsplatz-Rechners,
- zur Unterscheidung zwischen Daten und Befehlen werden Befehle durch Transfers an außerhalb des für den emulierten Platten- und/oder Diskettenspeicher gültigen Adressierraumes liegende Sonderadressen realisiert.

Eine erste vorteilhafte Ausgestaltung der vorliegenden Erfindung ermöglicht es, neben einem direkten Absetzen von Befehlen durch den Bediener auch mehrere Befehle zusammenzufassen und zu übertragen ohne daß in das Betriebssystem des Mehrarbeitsplatz-Rechners eingegriffen werden muß. Ein Datenaustausch zwischen Mehrarbeitsplatz-Rechner und Personalcomputer-Dateien kann somit durch Anwendungsprogramme auf der Seite des mittleren Datensystemes aktiviert werden. Diese vorteilhafte Ausgestaltung ist gekennzeichnet durch folgende weitere Merkmale:
- Zur Ausführung von Befehlen werden auf der Senderseite die herkömmlichen Kommandos aus einer Auftragsdatei gelesen,
- die Kommandos werden in Sonderbefehle an die Sonderadressen umgesetzt,
- auf der Empfängerseite wird die durch die Sonderbefehle angeforderte Aktion ausgeführt und das Ergebnis so zur Verfügung gestellt, daß es wieder von der verwendeten Sonderadresse gelesen werden kann,
- die Ergebnisse werden in einer Ergebnisdatei abgelegt.

Für eine besonders flexible Implementierung der Befehlsübergabe setzt eine weitere vorteilhafte Ausgestaltung folgende weitere Merkmale ein:
- Befehle zur Übertragung setzen sich zusammen aus einem Datenwort für die Befehlskennung und einem oder mehreren Datenwörtern, welche die Befehlsparameter beinhalten,
- die Ergebnisdaten zur übertragung setzen sich zusammen aus einem Datenwort für die Statusinformation, einem zweiten Datenwort, welches einen eventuellen Fehlercode darstellt, sowie einem oder mehreren Nutzdatenwörtern.

Um eine Kompatibilität zwischen unterschiedlichen Datensystemen von mittleren Datensystemen und Personalcomputer herzustellen ( siehe dazu Tischler, M.: PC intern 3.0, DATA BECKER GmbH, Düsseldorf 1992, S.917ff.), vor allem wenn der Mehrarbeitsplatz-Rechner der mittleren Datentechnik ein nicht-hierarchisches Dateisystem mit Bibliotheken und Bibliothekselementen verwendet (dazu beispielsweise Programm-Service Siemens-Systeme 300 - Beschreibung P71100-E3000-X-X-35), setzt eine weitere vorteilhafte Ausgestaltung der vorliegenden Erfindung eine besonders vorteilhafte und flexible Zuordnung der Elemente der nicht-hierarchischen Dateistrukturen von mittleren Datensystemen und Personalcomputersystem ein und deckt alle möglichen Fällen der Zuordnung ab. Dieses ist gekennzeichnet durch folgende Merkmale:
- Das nicht-hierarchische Dateisystem des Mehrarbeitsplatz-Rechners wird auf das DOS-Dateisystem des Personalcomputers abgebildet,
- Bibliothekselemente des nicht-hierarchischen Dateisystems werden standardmäßig wie DOS-Dateien behandelt, existieren die Bibliothekselemente in mehreren Ausgabeständen, so werden sie wie DOS-Verzeichnisse behandelt.

Eine weitere vorteilhafte Ausgestaltung stellt eine umfassende Kompatibilität bei der Umwandlung der Datenstrukturen her, indem sie unterschiedlichen Zeichensätze gemäß des folgenden Merkmales aufeinander abbildet:
- Beim Umwandeln von Zeichen des internationalen 8-Bit Zeichensatzes des DOS-Systemes in den 7-Bit Zeichensatz des mittleren Datensystemes werden unzulässige Zeichen in zulässige umgewandelt.

Eine weitere vorteilhafte Ausgestaltung des vorliegenden Verfahrens erweitert den Einsatzbereich des mittleren Datensystems, indem es folgendes Merkmal aufweist:
- Der Mehrarbeitsplatz-Rechner erhält über eine Schnittstelle zum Personalcomputer und die Steuerung mit Hilfe von Sonderbefehlen Zugang zu einem auf Seiten des Personalcomputers vorhandenen lokalen Netzwerk mit weiteren Computersystemen.

Eine andere vorteilhafte Ausgestaltung der vorliegenden Erfindung nutzt den Personalcomputer als besonders preiswerte und effektive Baugruppe zur Erweiterung von Mehrarbeitsplatz-Rechnersystemen und beschränkt das Maß an zusätzlich notwendiger Hardware auf ein Minimum. Dieses ist gekennzeichnet durch folgendes Merkmal:
- Der Personalcomputer wird ohne externe Peripherie betrieben und bildet selbst eine interne Komponente des mittleren Datensystemes.

Eine weitere vorteilhafte Ausgestaltung der vorliegenden Erfindung erweitert den Anwendungsbereich, indem es die Verwendung von Sonderbefehlen nicht lediglich für ein einzelnes Programm sondern für mehrere Programme gleichzeitig ermöglicht. Diese besitzt folgende Merkmale:
- Der Sonderadressbereich wird so vergrößert, daß eine Programmnummer durch die Auswahl der zugehörigen Sonderadresse übergeben wird,
- das Ergebnis eines Sonderbefehles wird durch die Vorgabe der gleichen Programmnummer von der zugehörigen Sonderadresse gelesen.

Eine letzte vorteilhafte Ausgestaltung der vorliegenden Erfindung optimiert die Organisation der Abarbeitung von Sonderbefehlen auf Seiten des Personalcomputers und erhöht die Flexibilität für einen gleichzeitigen Zugriff mehrerer Programme auf die Ergebnisse von durch Sonderbefehlen angestoßenen Aktionen. Diese ist gekennzeichnet durch folgende Merkmale:
- Die Ergebnisse mehrerer Aufträge werden auf Seiten des Personalcomputers in mehreren Ergebnispuffern zwischengespeichert,
- ein belegter Ergebnispuffer enthält die zum Auftrag gehörige Programmnummer,
- ist für ein Ergebnis kein freier Ergebnispuffer mehr vorhanden, so wird ein belegter Ergebnispuffer überschrieben.

Bei der Erfindung werden die Daten vorteilhafterweise über eine parallele Schnittstelle übertragen. Wenn die beiden Rechnersysteme über eine parallele Schnittstelle miteinander verbunden werden, kann ausgenutzt werden, daß als parallele Schnittstelle auf der Seite des Mehrarbeitsplatz-Rechners ein bereits vorhandener Anschluß für einen Plattenspeicher oder Diskettenspeicher verwendet wird, wobei über diese parallele Schnittstelle Daten und Befehle übertragen werden.

Die mit der Erfindung erzielten Vorteile bestehen insbesondere darin, daß auf Seiten des mittleren Datensystems keine Änderungen an Software oder Hardware erforderlich werden, die mit Hilfe des Personalcomputers herbeigeführte Lösung steckerkompatibel zur vorhandenen Hardware des Mehrarbeitsplatz-Systems ist, zur Steuerung der Kommunikation lediglich zusätzliche Betriebskomponenten ergänzt werden müssen, der Datentransfer zwischen Mehrarbeitsplatz-Rechner und Personalcomputer über eine schnelle parallele Schnittstelle erfolgt, und daß das vorhandene mittlere Datensystem durch den Austausch der Daten und die Konvertierung der Daten zwischen den beiden unterschiedlichen Dateien und Datenstrukturen von mittlerem Datensystem und Personalcomputer nicht zusätzlich belastet wird, sondern der Personalcomputer diese Aufgaben selbst und um ein Vielfaches schneller löst. Darüber hinaus kann der unzuverlässige, wartungsintensive, großvolumige Standardplattenspeicher der Mehrarbeitsplatz-Rechnersysteme durch günstigen Massenplattenspeicher von Personalcomputern ersetzt werden. Als verwendete parallele Schnittstelle wird ein bereits vorhandener Standarddatenanschluß auf Seiten des Mehrarbeitsplatz-Rechnersystemes verwendet. Durch das erfindungsgemäße Verfahren werden über diese Standardschnittstelle nicht lediglich Daten, sondern darüber hinaus auch Befehle übertragen. Dadurch lassen sich die durch einen Personalcomputer verwalteten Daten von Seiten des Mehrarbeitsplatz-Rechnersystemes so behandeln, als lägen sie auf herkömmlichen Massenspeichern des mittleren Datensystemes.

Bei der Erfindung wird einerseits die Funktion des Plattenspeichers emuliert und werden andererseits zusätzliche Sonderbefehle übertragen, die auf dem emulierenden Personalcomputer abgearbeitet werden. Als Sonderbefehle werden solche bedarfsabhängigen Befehle definiert, die bestimmte Funktionen im Personalcomputer aktivieren. Beispielsweise können Befehle aufgerufen werden, die DOS-Funktionen ausführen.

Ein Ausführungsbeispiel der Erfindung, bei dem ein SICOMP-R-Mehrarbeitsplatz-Rechner (Firma Siemens) als mittleres Datensystem eingesetzt wird, ist in den Zeichnungen dargestellt und wird im folgenden näher beschrieben. Dabei zeigen:
- FIG 1: ein Blockschaltbild der Anschaltung eines Personalcomputers an einen SICOMP-R-Rechner,
- FIG 2: den Aufbau eines Sonderbefehldatenblockes,
- FIG 3: den Aufbau eines Rückgabedatenblocks,
- FIG 4: die Adressierung von Sonderadressen für Sonderbefehle,
- FIG 5: den Aufbau des hierarchischen DOS-Datensystems und
- FIG 6: den Aufbau des SICOMP-R-Dateisystems.

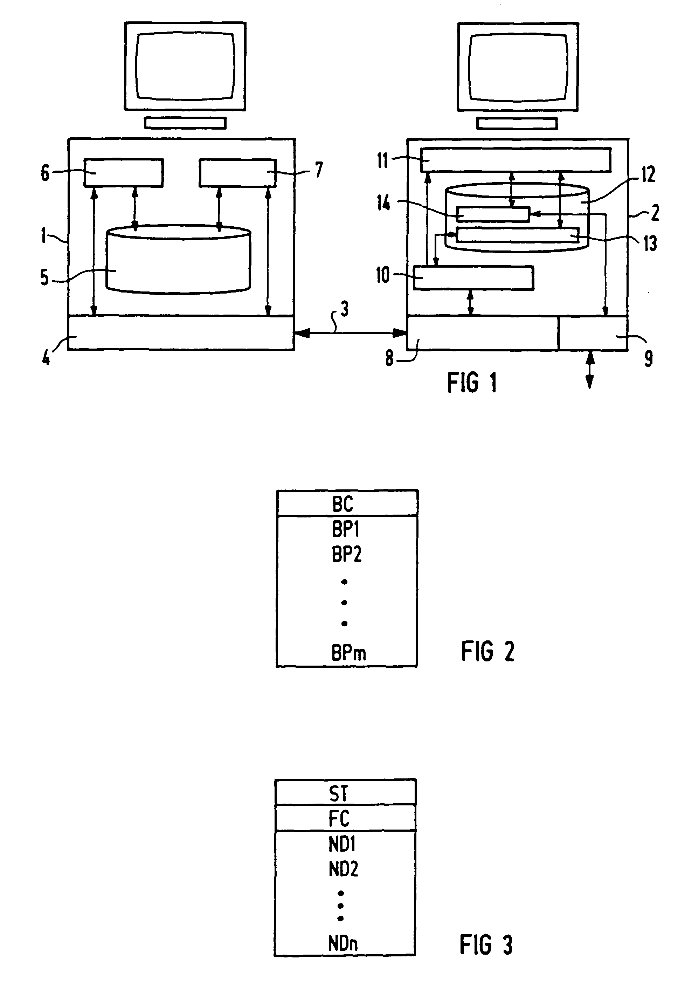

In der Darstellung in FIG 1 ist ein Blockschaltbild zur Anschaltung eines Personalcomputers an einen SICOMP-R-Rechner gezeigt. Der SICOMP-R-Rechner 1 ist mit dem Personalcomputer 2 über eine beispielsweise parallele Schnittstelle 3 verbunden.

Als Anschluß für die Schnittstelle 3 dient auf Seiten des SICOMP-R-Systems 1 ein herkömmlicher SICOMP-R-Platten- bzw. Diskettenspeicher-Anschluß 4. Auf Seiten des Personalcomputers 2 erfolgt der Anschluß der Schnittstelle 3 über eine eigens konzipierte Steckkarte zur Anschaltung an das SICOMP-R-System 8.

Das Betriebssystem des SICOPM-R-Rechners 6 greift direkt auf den als beispielsweise parallele Schnittstelle verwendeten Platten- bzw. Diskettenspeicher-Anschluß 4 zu und hat daneben direkten Zugriff auf das SICOMP-R-Dateisystem 5. Eine Einheit zur Umsetzung für Sonderbefehle 7 hat ebenfalls sowohl Zugriff auf das SICOMP-R-Dateisystem 5 und den als Zugang zur Schnittstelle verwendeten Platten- bzw. Diskettenspeicher-Anschluß 4.

Auf Seiten des Personalcomputers 2 gelangen Informationen von der Steckkarte zur Anschaltung 8 zum SICOMP-R-Sonderbefehlsinterpreter und File-Transfer-Treiber 10. Von dort werden die Informationen weitergeführt zu einem Platten- bzw. Diskettenspeicheremulator 11. In dem DOS-Dateisystem 12 befinden sich zum einen SICOMP-R-Dateiabbildungen auf DOS-Dateien 13 sowie reine DOS-Dateien 14. Über die parallele Schnittstelle 3 übertragene SICOMP-R-Daten werden vom Sonderbefehlsinterpreter und File-Transfer-Treiber 10 direkt als SICOMP-R-Dateiabbildung 13 im DOS-Dateisystem 12 abgelegt. Über den Sonderbefehlsinterpreter und File-Transfer-Treiber 10 besteht ein ständiger Zugriff zu diesen SICOMP-R-Dateiabbildungen 13. Der SICOMP-R-Platten- bzw. Diskettenspeicher-Emulator 11 hat sowohl Zugriff auf die reinen DOS-Dateien 14 als auch auf die SICOMP-R-Dateiabbildungen 13. Über eine LAN-Schnittstelle 9, welche Zugriff auf DOS-Dateien 14 besitzt, erfolgt eine Anbindung an vorhandene Lokal-Area-Networks.

In der Darstellung in FIG 2 ist ein Sonderbefehldatenblock gezeigt. Dieser besteht aus einem Befehlscode BC und einem oder mehreren darauffolgenden Befehlsparametern BP1...BPm.

In der Darstellung in FIG 3 ist ein Rückgabedatenblock gezeigt, welcher aus einem Datenwort zur Statusinformation ST, einem darauffolgenden Datenwort FC, welches einen eventuell auftretenden Fehlercode repräsentiert, und einem oder mehreren Nutzdatenwörtern ND1...NDn.

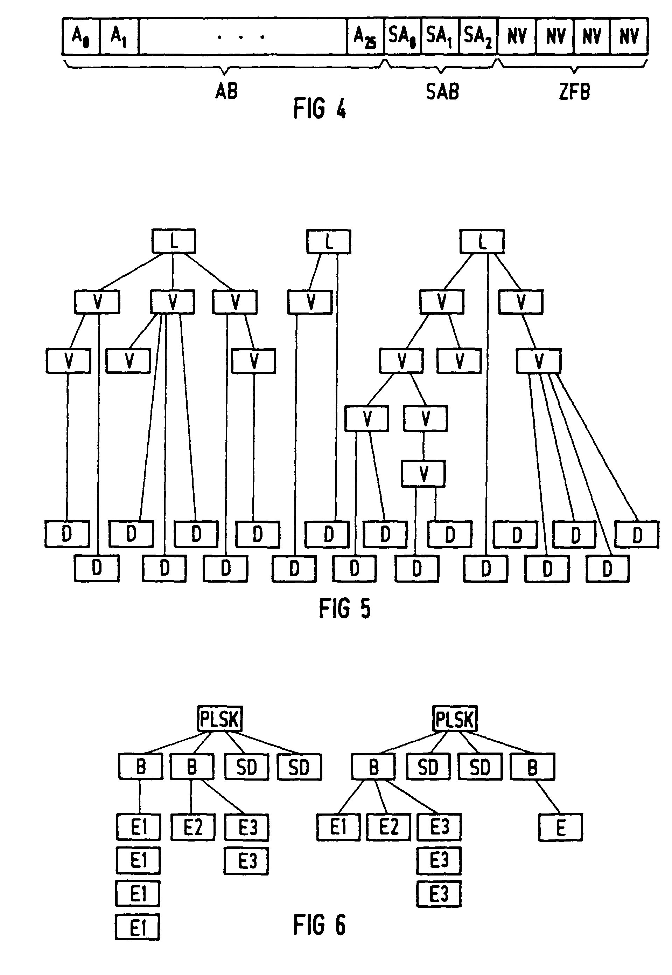

In der Darstellung in FIG 4 ist die Organisation der vorhandenen Adressenleitungen zur Realisierung von Sonderbefehlen zur Übertragung über die parallele Schnittstelle gezeigt. Mehrere nebeneinanderliegende aufeinanderfolgende Adreßleitungen A₀ bis beispielsweise A₂₅ bilden den normalen Adreßbereich AB zur Verwaltung der Datenkapazität des verwendeten Datenspeichers. Darüber hinaus vorhandene Adreßleitungen, welche sowohl durch Hardware als auch durch Software eine Adressierung eines größeren Bereiches ermöglichen, werden je nach Bedarf als Sonderadreßbereiche SAB genutzt. Solche Sonderadreßleitungen SA₀ bis beispielsweise SA₂ dienen zur Information des angesprochenen Systems, daß das nun folgende Datenwort einen Sonderbefehl repräsentiert. Weitere vorhandene nicht verwendete Adreßleitungen NV bleiben ohne Bedeutung. Wird eine in diesem Bereich liegende Adreßleitung adressiert, so handelt es sich um einen Zugriffsfehler. Diese Adreßleitungen ohne Verwendung bilden daher den Zugriffsfehlerbereich ZFB.

In der Darstellung in FIG 5 ist die Struktur des hierarchisch gegliederten DOS-Dateisystems gezeigt. Auf der obersten Ebene befinden sich mehrere voneinander unabhängige Laufwerke L, welche sich jedoch auf ein und demselben physikalischen Datenträger befinden können. Diesen Laufwerken L sind eine beliebige Anzahl von Verzeichnissen V untergeordnet, welche in der darunterliegenden Ebene wiederum weitere Unterverzeichnisse V besitzen können. Die Verzeichnisse V können, wie in FIG 5 zu erkennen, in mehrere hierarchische Stufen untergliedert sein. Auf der untersten Ebene dieses hierarchischen Dateisystemes befinden sich Dateien D, welche sowohl einem Laufwerk L auf oberster Ebene als auch Verzeichnissen V beliebiger Hierarchie zugeordnet sein können.

In der Darstellung in FIG 6 ist der Aufbau des SICOMP-R-Dateisystems gezeigt, welches sich im Gegenteil zum DOS-Dateisystem aus FIG 5 in lediglich zwei Ebenen untergliedert. An der Wurzel des Dateisystemes stehen SICOMP-R-Datenträgerbereiche PLSK. Diese können zum einen direkt SICOMP-R-Betriebssystemdateien SD beinhalten, als auch Bibliotheken B. Die Bibliotheken B ihrerseits beinhalten SICOMP-R-Elemente E. Diese Elemente E können in mehreren Ausgabeständen E1 bis beispielsweise E3 existieren. Solche Bibliothekselemente mit mehreren Ausgabeständen werden, wenn für sie kein bestimmter Ausgabestand angegeben ist, entsprechend den Verzeichnissen V eines DOS-Dateisystems behandelt.

Bei der erfindungsgemäßen Verbindung zwischen den beiden Systemen Personalcomputer und SICOMP-R-Rechner werden die Datenspeicher-Laufwerke an einer SICOMP-Geräteschnittstelle durch einen Personalcomputer ersetzt. In den Personalcomputer wird zur Anschaltung an die SICOMP-Geräteschnittstelle 4 eine Steckkarte 8 eingebracht. Personalcomputer-Steckkarte 8 und SICOMP-Geräteschnittstelle 4 bilden vorteilhafterweise eine parallele Schnittstelle 3.

Der Personalcomputer selbst emuliert einen Disketten- bzw. Plattenspeicher des SICOMP-Rechners vom Typ 3943 oder 3944. Eine entsprechende Einheit 11 befindet sich auf der Seite des Personalcomputers und ermöglicht eine Abbildung der unterschiedlich aufgebauten Dateisysteme von SICOMP-R- und Personalcomputer. Die Daten der emulierten SICOMP-Datenspeicher befinden sich physikalisch als DOS-Dateien auf dem gekoppelten Personalcomputer. Durch die Emulation 11 werden die durch den Personalcomputer gebildeten Datenspeicherlaufwerke wie normale SICOMP-Datenspeicher behandelt, ohne daß auf Seiten des SICOMP-Rechners dessen Bedienkonzept, Betriebssystem oder Komponenten verändert werden müssen. Die Aufgaben der SICOMP-Plattensteuerung übernimmt bei einer Anbindung über eine parallele Schnittstelle der vorliegenden Erfindung ein Sonderbefehlsinterpreter und File-Transfer-Treiber 10. Dieser setzt die Steuerbefehle für eine SICOMP-Plattensteuerung in Zugriffe auf DOS-Dateien oder DOS-Laufwerke um, wobei die Inhalte dieser DOS-Dateien/Lauf-werke exakte Abbilder von SICOMP-Datenspeichern sind. Durch die SICOMP eigene Datei- und Datenstruktur 5 ist ein direkter Austausch von Daten zwischen Personalcomputer und SICOMP-Datenspeichern nicht möglich.

Das in FIG 6 dargestellte und bereits weiter oben erläuterte SICOMP-R-Dateisystem 5 wird auf das in FIG 5 dargestellte hierarchisch gegliederte DOS-Dateisystem 12 abgebildet, so daß neben reinen DOS-Dateien 14 auch SICOMP-R-Dateiabbildungen als DOS-Dateien 13 im DOS-Dateisystem 12 abgepeichert werden können. Dabei wird durch die beiden Einheiten Sonderbefehlsinterpreter und File-Transfer-Treiber 10 sowie SICOMPR-Platten/Diskettenspeicher-Emulator 11 folgende Zuordnung zwischen den einzelnen Ebenen der beiden Dateisysteme 5 und 12 vorgenommen.

Einem SICOMP-R-Datenträgerbereich PLSK entspricht logisch ein Laufwerk L auf DOS-Ebene. Damit jedoch auf einem DOS-Dateisystem mit einem Laufwerk mehrere PLSKs gespeichert werden können, stellt sich ein PLSK aus Sicht des SICOMP-R-Platten/ Diskettenspeicher-Emulators 11 als Verzeichnis V dar. Solche Verzeichnisse werden im folgenden als Stammverzeichnisse bezeichnet. Eine SICOMP-R-Systemdatei SD wird auf eine DOS-Datei D abgebildet, die nicht einem Verzeichnis V, sondern direkt einem Laufwerk L bzw. aus Sicht des SICOMP-R-Platten/ Diskettenspeicher-Emulators 11 einem Stammverzeichnis untergeordnet ist. Bibliotheken B auf Seite des SICOMP-R-Rechners werden auf Verzeichnisse V im DOS-Dateisystem abgebildet. Bibliothekselemente E des SICOMP-R-Dateisystems werden entsprechend der Tatsache, ob sie in mehreren Ausgabeständen existieren, entweder einer DOS-Datei D oder einem Verzeichnis V auf DOS-Ebene zugeordnet. Handelt es sich um Elemente in mehreren Ausgabeständen E1 bis E3, so werden diese ähnlich wie Verzeichnisse V auf DOS-Dateisystemebene behandelt, sofern kein bestimmter Ausgabestand für sie angegeben ist.

In FIG 6 mit entsprechender Versionsnummer, beispielsweise anhand mehrerer senkrecht untereinander stehender Elemente E1 oder E3, dargestellte Bibliothekselemente E werden auf DOS-Dateien D im DOS-Dateisystem 12 abgebildet. Systemdateien SD und Bibliothekselemente E können zwischen SICOMP-Datenträgerbereichen PLSK und DOS-Verzeichnissen V in beide Richtungen übertragen werden. Das Kopieren kann sowohl im Textmodus, also alphanumerisch, als auch binär durchgeführt werden. Bei binärem Transfer werden die Daten selbst nicht umgewandelt. Transferiert wird von Dateianfang bis Dateiende. Bei Transfer im Textmodus werden die auf Seiten des Personalcomputersystems im internationalen 8-Bit ASCII-Zeichensatz vorliegenden Zeichen in den auf Seiten des SICOMP-R-Systems in Form eines ASCII-Zeichensatzes mit einer Datenbreite von 7-Bit vorliegenden Zeichensatz umgewandelt. Auf Seiten des SICOMP-R-Systems unzulässige Zeichen werden soweit möglich in Zeichen des internationalen Zeichensatzes oder in '?' umgewandelt.

Der File-Transfer kann sowohl von Seiten des Personalcomputers als auch von Seiten des SICOMP-R-Rechners aktiviert werden. Für den Transfer von DOS- in SICOMP-Files muß der betroffene Datenträger auf Seiten des SICOMP-R-Systems deaktiviert werden, also Off-line geschaltet werden. Bei der Aktivierung von Seiten des SICOMP-R-Systems wird das automatisch durchgeführt.

Zur Aktivierung von Funktionen auf dem Personalcomputer von Seiten des SICOMP-R-Systems aus, wird die verwendete parallele Schnittstelle 3 neben der Übertragung von Daten auch zur Übertragung von Befehlen genutzt. Solche Befehle sind definierte Datenblöcke und werden im folgenden als Sonderbefehle bezeichnet. Diese Sonderbefehle werden auf festgelegte Adressen außerhalb des Adreßenvolumens von SICOMP-R-Datenträgern geschrieben. Da das Dateisystem der SICOMP-R-Rechner Datenträger mit einer Kapazität von maximal 32 Megabyte verwalten kann, durch Hard- und Software jedoch mindestens 128 Megabyte adressierbar sind, werden die zur Adressierung des Bereiches über 32 Megabyte ungenutzt vorhandenen Adreßleitungen durch Zuweisung von Sonderadressen genutzt. Der SICOMP-R-Sonderbefehlsinterpreter 10 auf Seiten des Personalcomputers erkennt anhand der Zieladresse, daß es sich nicht um einen Zugriffsfehler, sondern um einen Sonderbefehl handelt. Ohne Geräteanzeigen zu liefern, wird die angeforderte Aktion ausgeführt und ein Antwortdatenblock zur Verfügung gestellt, der ebenfalls wieder von der verwendeten Sonderadresse gelesen werden kann. Durch diesen Mechanismus kann File-Transfer von der SICOMP-R-Seite aus aktiviert werden, ohne in das bestehende System einzugreifen. Außerdem können notwendige Verwaltungsfunktionen auf Seiten des Personalcomputers wie etwa Dateiverzeichnis angeben, Verzeichnisse einrichten und Löschen, Dateien löschen etc., von der Seite des SICOMP-R-Rechners aus durchgeführt werden. Dadurch ist es möglich, den Personalcomputer ohne Sichtgerät und Tastatur zu betreiben und diesen als interne Komponente des SICOMP-R-Systems zu verwenden.

Die Sonderbefehle sind vorteilhafterweise bedarfsabhängig definiert: Beispielsweise beinhaltet der Befehl VERSION eine Versionserkennung des PC-Programms SFT und der Befehl MOUNT die Festlegung der Datei des SICOMP-Datenträgers auf dem Plattenspeicher. Der Befehl COPY_ORG_TO_DOS kopiert eine Datei vom SiCOMP-Datenträger in eine DOS-Datei, und der Befehl COPY_DOS_TO_ORG kopiert eine Datei auf den SiCOMP-Datenträger, Weiterhin können normale DOS-Funktionen als Senderbefehle festgelegt werden. Beispielsweise wird mit dem Befehl MKDIR ein DOS-Verzeichnis erstellt und mit dem Befehl RMDIR ein leeres DOS-Verzeichnis gelöscht.

Ein Sonderbefehl wird abgesetzt, indem mit einem Aufruf eine Bytefolge, die die Befehlskennung BC und Parameter für die entsprechende Funktion BP1 bis BPm enthält, an eine Spezialadresse eines SICOMP-R-Teilgerätes, welches durch einen Personalcomputer emuliert wird, verschickt wird. Eine solche Spezialadresse SA₀...SA₂ wird aus dem Bereich nicht verwendeter Adreßleitungen NV gewählt. Dies sind alle die Adreßleitungen, welche außerhalb des zur Ansteuerung des emulierten Datenspeichers verwendeten Adreßbereiches AB mit den Adreßleitungen A₀ bis beispielsweise A₂₅ liegen. Die zur erfindungsgemäßen Realisierung von Sonderbefehlen verwendeten Adreßleitungen, die Sonderadressen SA₀ bis SA₂ darstellen, bilden den Sonderadreßbereich SAB. Alle darüber hinaus verfügbaren nicht verwendeten Adreßleitungen NV bilden den Zugriffsfehlerbereich ZVB. Wird eine dieser Adreßleitungen NV angesprochen, so wird ein entsprechender Zugriffsfehler gemeldet.

Rückgabeinformationen zu einem Sonderbefehl werden eingelesen, indem mit einem Aufruf eine Bytefolge von der Spezialadresse gelesen wird. Die Rückgabeinformation bezieht sich stets auf den zuletzt abgesetzten Sonderbefehl. Ein Rückgabedatenblock setzt sich zusammen aus einem ersten Datenwort, welches Statusinformation ST liefert. Dabei kann es sich um Informationen handeln, ob gültige Nutzdaten zum Sonderbefehl vorhanden sind, ob es sich um einen ungültigen Sonderbefehl handelt, ob ein DOS-Fehler aufgetreten ist oder ein entsprechend vorher festgelegter interner Fehlercode, der SICOMP-R-Platten/Diskettenspeicher-Emulation 11 hinterlegt wird. Ein zweites Datenwort enthält eine eventuelle notwendige DOS-Fehlernummer als Fehlercode FC. Darauf folgen ein oder mehrere Nutzdatenwörter ND1 bis NDn.

Zur Ausführung von Sonderbefehlen über die parallele Schnittstelle 3 werden auf Seiten des SICOMP-R-Rechners entweder Kommandos direkt vom Bediener abgesetzt oder aus einer Auftragsdatei gelesen und anschließend in einem Umsetzer für Sonderbefehle 7 in geeignete Sonderbefehle gewandelt. Auf der Seite des Personalcomputers wird die angeforderte Aktion durch einen SICOMP-R-Sonderbefehlsinterpreter 10 ausgeführt und das Ergebnis zur Verfügung gestellt, welches wieder über die gleiche Sonderadresse gelesen werden kann. Die Ergebnisse selbst werden in einer Ergebnisdatei abgelegt. Dadurch kann der Datenaustausch zwischen SICOMP-R-Rechner und DOS-Dateien durch Anwenderprogramme auf der Seite des SICOMP-R-Rechners aktiviert werden.

Damit auf Seiten des SICOMP-R-Rechners nicht nur ein Programm, sondern mehrere die Funktion der Befehlsübermittlung durch Sonderbefehle nutzen können, wird der verwendete Bereich von Sonderadressen so variiert, daß die entsprechende Programmnummer des Programmes, welches den Sonderbefehl absetzt, in der Sonderadresse mit übergeben werden kann. Der SICOMP-R-Sonderbefehlsinterpreter 10 benutzt die übergebene Programmnummer als Auftragsindikation. Das Ergebnis einer Sonderfunktion selbst kann nur bei Vorgabe der gleichen Programmnummer gelesen werden. Dazu muß wiederum die gleiche Sonderadresse, die zum Absetzen des Sonderbefehls diente, gelesen werden. Da die einzelnen durch die Sonderbefehle gesetzten Aufträge unterschiedlich lange Rechenzeiten auf Seiten des Personalcomputers in Anspruch nehmen können, und zum anderen die Ergebnisse mehrere Aufträge zu unregelmäßigen Zeiten durch die den Auftrag absetzenden Programme auf Seiten des SICOMP-R-Rechners abgeholt werden, werden auf Seiten des Personalcomputers die Ergebnisse mehrere Aufträge in mehrere Ergebnispuffern zwischengespeichert. Der SICOMP-R-Sonderbefehlsinterpreter 10 schreibt das Ergebnis eines Auftrages mit der dazugehörigen Auftragsindikation in einen freien Ergebnispuffer und gibt diesen Puffer nach dem Auslesen des Ergebnisses wieder frei. Ist für ein Ergebnis kein freier Puffer mehr vorhanden, da zuviele Aufträge bestehen oder ein Programm ein Ergebnis nicht abholt, so wird ein belegter Puffer überschrieben. Beim Versuch das überschriebene Ergebnis zu lesen, bekommt das betreffende Programm eine Anzeige übergeben, die signalisiert, daß der zuletzt abgesetzte Befehl erneut ausgeführt werden muß. Da die benötigte Anzahl von Ergebnispuffern von der Verwendung abhängt und der dafür verbrauchte Speicherplatz gering gehalten werden soll, läßt sich die Anzahl der Ergebnispuffer auf Seiten des Personalcomputers variieren.

Durch Verwendung des Personalcomputers als Gateway zu einem lokalen Netzwerk wird der SICOMP-R-Rechner zu einem Datenaustausch mit weiteren anderen Computersystemen wie beispielsweise UNIX-Systemen befähigt. Dies geschieht beispielsweise dadurch, daß UNIX als Server für den Personalcomputer installiert ist und Laufwerke L des Personalcomputers auf UNIX abgebildet werden. Der Personalcomputer besitzt dazu eine Lokal-Area-Network LAN-Schnittstelle 9, welche auf DOS-Dateien 14 des Personalcomputers-Dateisystems 12 Zugriff nehmen kann. Über den SICOMP-R-Platten-/Diskettenspeicher-Emulator 11, welcher Zugriff sowohl auf DOS-Dateien 14 als auch auf SICOMP-R-Dateiabbildungen auf DOS-Dateiebene 13 Zugriff hat, läßt sich die LAN-Schnittstelle 9 somit auch zur Übertragung von Daten des SICOMP-R-Rechnersystemes verwenden. Betreibt man den Personalcomputer, wie bereits weiter oben dargelegt, als interne Komponente des SICOMP-R-Rechnersystems, so ermöglicht dieser in der erfindungsgemäß angebundenen Form die Möglichkeit, durch Einsatz der Sonderbefehle von Seiten des SICOMP-R-Rechners auf unterschiedliche Rechnerplattformen innerhalb eines lokalen Netzwerkes zuzugreifen.

## Patentansprüche

1. Verfahren zur Anbindung eines Personalcomputers an einen Mehrarbeitsplatzrechner der mittleren Datentechnik mit File-Transfer zwischen diesen beiden Systemen mit folgenden Merkmalen:
- Der Personalcomputer (2) emuliert einen Standardplattenspeicher und/oder Diskettenspeicher des Mehrarbeitsplatz-Rechners (1),
- zur Unterscheidung zwischen Daten und Befehlen werden Befehle durch Transfers an außerhalb des für den emulierten Platten- und/oder Diskettenspeicher gültigen Adressierraumes (AB) liegende Sonderadressen (SA₀...SA₂) realisiert.

2. Verfahren nach Anspruch 1 mit folgenden weiteren Merkmalen:
- Zur Ausführung von Befehlen werden auf der Senderseite die herkömmlichen Kommandos aus einer Auftragsdatei gelesen,
- die Kommandos werden in Sonderbefehle an die Sonderadressen umgesetzt,
- auf der Empfängerseite wird die durch die Sonderbefehle angeforderte Aktion ausgeführt und das Ergebnis so zur Verfügung gestellt, daß es wieder von der verwendeten Sonderadresse (SA₀...SA₂) gelesen werden kann,
- die Ergebnisse werden in einer Ergebnisdatei abgelegt.

3. Verfahren nach Anspruch 1 oder 2 mit folgenden weiteren Merkmalen :
- Die Befehle zur Übertragung (3) setzen sich zusammen aus einem Datenwort für die Befehlskennung (BC) und einem oder mehreren Datenwörtern, welche die Befehlsparameter (BP1..BPm) beinhalten,
- die Ergebnisdaten zur Übertragung setzen sich zusammen aus einem Datenwort für die Statusinformation (ST), einem zweiten Datenwort, welches einen eventuellen Fehlercode (FC) darstellt, sowie einem oder mehreren Nutzdatenwörtern (ND1... NDn).

4. Verfahren nach einem oder mehreren der vorstehenden Ansprüche, wobei der Mehrarbeitsplatz-Rechner der mittleren Datentechnik ein nicht-hierarchisches Dateisystem mit Bibliotheken und Bibliothekselementen verwendet, mit folgenden Merkmalen:
- Das nicht-hierarchische Dateisystem des Mehrarbeitsplatz-Rechners (5) wird auf das DOS-Dateisystem (12) des Personalcomputers (2) abgebildet,
- Bibliothekselemente (E) des nicht-hierarchischen Dateisystems (5) werden standardmäßig wie DOS-Dateien (D) behandelt, existieren die Bibliothekselemente in mehreren Ausgabeständen (E1...E3), so werden sie wie DOS-Verzeichnisse (V) behandelt.

5. Verfahren nach einem oder mehreren der vorstehenden Ansprüche, wobei der Mehrarbeitsplatz-Rechner der mittleren Datentechnik einen Zeichensatz mit 7 Bit Auflösung verwendet, mit folgendem weiteren Merkmal:
- Beim Umwandeln von Zeichen des 7-Bit Zeichensatzes des mittleren Datensystemes in den internationalen 8-Bit Zeichensatz des DOS-Systemes werden unzulässige Zeichen in zulässige umgewandelt.

6. Verfahren nach einem oder mehreren der vorstehenden Ansprüche mit folgendem weiteren Merkmal:
- Der Mehrarbeitsplatz-Rechner (1) erhält über eine Schnittstelle zum Personalcomputer und die Steuerung mit Hilfe von Sonderbefehlen Zugang zu einem auf Seiten des Personalcomputers vorhandenen lokalen Netzwerk (9) mit weiteren Computersystemen.

7. Verfahren nach einem oder mehreren der vorstehenden Ansprüche mit folgendem weiteren Merkmal:
- Der Personalcomputer (2) wird ohne externe Peripherie betrieben und bildet selbst eine interne Komponente des mittleren Datensystemes.

8. Verfahren nach einem oder mehreren der vorstehenden Ansprüche zur gleichzeitigen Verwendung von Sonderbefehlen in mehreren Programmen mit folgenden Merkmalen:
- Der Sonderadressbereich (SAB) wird so vergrößert, daß eine Programmnummer durch die Auswahl der zugehörigen Sonderadresse (SA₀...SA₂) übergeben wird,
- das Ergebnis eines Sonderbefehles wird durch die Vorgabe der gleichen Programmnummer von der zugehörigen Sonderadresse (SA₀...SA₂) gelesen.

9. Verfahren nach einem der vorhergehenden Ansprüche, wobei die Daten und Befehle über eine parallele Schnittstelle übertragen werden.

10. Verfahren nach Anspruch 8 mit folgenden Merkmalen:
- Die Ergebnisse mehrerer Aufträge werden auf Seiten des Personalcomputers in mehreren Ergebnispuffern zwischengespeichert,
- ein belegter Ergebnispuffer enthält die zum Auftrag gehörige Programmnummer,
- ist für ein Ergebnis kein freier Ergebnispuffer mehr vorhanden, so wird ein belegter Ergebnispuffer überschrieben.

11. Verfahren nach Anspruch 9, wobei als parallele Schnittstelle (3) auf der Seite des Mehrarbeitsplatz-Rechners (1) ein bereits vorhandener Anschluß (4) für einen Plattenspeicher oder Diskettenspeicher verwendet wird.

## Claims

1. Method for connecting a personal computer to a multi-workstation computer of office-oriented data processing technology with file transfer between these two systems, having the following features:
- the personal computer (2) emulates a standard disk store and/or diskette store of the multi-workstation computer (1),
- in order to distinguish between data and instructions, instructions are realised by transfers to special addresses (SA₀ ... SA₂) lying outside the address space (AB) which is valid for the emulated disk store and/or diskette store.

2. Method according to claim 1, having the following further features:
- in order to execute instructions, the conventional commands are read out of a job file at the sending end,
- the commands are converted into special instructions to the special addresses,
- at the receiving end, the action requested by the special instructions is carried out and the result is made available in such a way that it can again be read by the special address (SA₀ ... SA₂) which is used,
- the results are filed in a result file.

3. Method according to claim 1 or 2, having the following further features:
- the instructions for transmission (3) are made up of a data word for the instruction identification (BC) and one or more data words which contain the instruction parameters (BP1 .. BPm),
- the items of result data for transmission are made up of a data word for the status information (ST), a second data word which represents a possible error code (FC), and one or more user data words (ND1 ... NDn).

4. Method according to one or more of the preceding claims, wherein the multi-workstation computer of office-oriented data processing technology uses a non-hierarchical file system with libraries and library elements, having the following features:
- the non-hierarchical file system of the multi-workstation computer (5) is mapped on to the DOS file system (12) of the personal computer (2),
- library elements (E) of the non-hierarchical file system (5) are processed in a standard way as DOS files (D); if the library elements exist in a plurality of revision levels (E1 ... E3), they are processed as DOS directories (V).

5. Method according to one or more of the preceding claims, wherein the multi-workstation computer of office-oriented data processing technology uses a character set with 7-bit resolution, having the following further feature:
- when characters of the 7-bit character set of the office-oriented data system are converted into the international 8-bit character set of the DOS system, unacceptable characters are converted into acceptable ones.

6. Method according to one or more of the preceding claims, having the following further feature:
- by way of an interface to the personal computer and the control with the aid of special instructions, the multi-workstation computer (1) receives access to a local network (9) with further computer systems that is present on the personal computer side.

7. Method according to one or more of the preceding claims, having the following further feature:
- the personal computer (2) is operated without external peripheral equipment and itself forms an internal component of the office-oriented data system.

8. Method according to one or more of the preceding claims for simultaneous use of special instructions in a plurality of programs, having the following features:
- the special address area (SAB) is extended in such a way that a program number is transmitted by the selection of the associated special address (SA₀ ... SA₂),
- the result of a special instruction is read by the input of the same program number by the associated special address (SA₀ ... SA₂).

9. Method according to one of the preceding claims, wherein the data and instructions are transmitted via a parallel interface.

10. Method according to claim 8, having the following features:
- the results of a plurality of jobs are stored temporarily on the personal computer side in a plurality of result buffers,
- an occupied result buffer contains the program number belonging to the job,
- if there is no longer a free result buffer available for a result, an occupied result buffer is overwritten.

11. Method according to claim 9, wherein an already existing connection (4) for a disk store or diskette store is used as a parallel interface (3) on the multi-workstation computer (1) side.

## Revendications

1. Procédé pour rattacher un ordinateur personnel à un ordinateur à postes de travail multiples de la moyenne informatique par transfert de fichiers entre ces deux systèmes, ayant les caractéristiques suivantes :
- l'ordinateur personnel (2) émule une mémoire à disque normalisée et/ou une mémoire à disquette de l'ordinateur (1) à postes de travail multiples,
- pour faire la différence entre des données et des instructions, on réalise des instructions par transfert à des adresses (SA₀...SA₂) spéciales se trouvant à l'extérieur de la zone (AB) d'adressage valable pour la mémoire à disque et/ou la mémoire à disquette émulée.

2. Procédé suivant la revendication 1, comportant les caractéristiques supplémentaires suivantes :
- pour exécuter des instructions, on lit du côté émetteur les commandes usuelles dans un fichier de tâches,
- les commandes sont converties en instructions spéciales aux adresses spéciales,
- du côté du récepteur, l'action demandée par les instructions spéciales est exécutée et le résultat est mis à disposition de manière à pouvoir être lu à nouveau par l'adresse (SA₀...SA₂) spéciale utilisée,
- les résultats sont enregistrés dans un fichier de résultat.

3. Procédé suivant la revendication 1 ou 2, comportant les caractéristiques supplémentaires suivantes :
- les instructions pour la transmission (3) se composent d'un mot de données pour l'identification (BC) d'instructions et d'un ou plusieurs mots de données qui contiennent les paramètres (BP1...BPm) d'instructions,
- les données de résultat pour la transmission se composent d'un mot de données pour l'information (ST) d'état, d'un deuxième mot de données, qui représente un éventuel code (FC) d'erreur, ainsi que d'un ou plusieurs mots (ND1... NDn) de données utiles.

4. Procédé suivant l'une ou plusieurs des revendications précédentes, l'ordinateur à postes de travail multiples de la moyenne informatique utilisant un système de fichiers non hiérarchisé à bibliothèques et éléments de bibliothèque, comportant les caractéristiques suivantes :
- le système de fichiers non hiérarchisé de l'ordinateur (5) à postes de travail multiples est reproduit sur le système (12) de fichiers DOS de l'ordinateur (2) personnel,
- des éléments (E) de bibliothèque du système (5) de fichiers non hiérarchisé sont traités conformément aux normes comme des fichiers (D) DOS, si les éléments de bibliothèque existent en plusieurs fichiers (E1...E3) de sortie, ils sont traités comme des répertoires (V) DOS.

5. Procédé suivant l'une ou plusieurs des revendications précédentes, l'ordinateur à postes de travail multiples de la moyenne informatique utilisant un jeu de signes à résolution de 7 bits, comportant la disposition supplémentaire suivante :
- lors de la conversion de signes du jeu de signes à 7 bits du système de la moyenne informatique en le jeu de signes international de 8 bits du système DOS, des signes qui ne sont pas admis sont convertis en signes qui sont admis.

6. Procédé suivant l'une ou plusieurs des revendications précédentes, comportant la caractéristique supplémentaire suivante :
- l'ordinateur (1) à postes de travail multiples reçoit par l'intermédiaire d'une interface avec l'ordinateur personnel et par l'intermédiaire de la commande, à l'aide d'instructions spéciales, accès à un réseau (9) local présent du côté de l'ordinateur personnel et comportant des systèmes informatiques supplémentaires.

7. Procédé suivant l'une ou plusieurs des revendications précédentes, comportant la caractéristique supplémentaire suivante :
- l'ordinateur (2) personnel fonctionne sans périphérie externe et forme lui-même un composant interne du système de la moyenne informatique.

8. Procédé suivant l'une ou plusieurs des revendications précédentes pour l'utilisation simultanée d'instructions spéciales dans plusieurs programmes; comportant les caractéristiques suivantes :
- la zone (SAB) d'adresses spéciales est agrandie de manière qu'il soit transmis un numéro de programme par la sélection de l'adresse (SA₀...SA₂) associée,
- le résultat d'une instruction spéciale est lu par l'adresse (SA₀...SA₂) associée en prescrivant le même numéro de programme.

9. Procédé suivant l'une des revendications précédentes, les données et les instructions étant transmises par l'intermédiaire d'une interface parallèle.

10. Procédé suivant la revendication 8, comportant les caractéristiques suivantes :
- les résultats de plusieurs tâches sont mis en mémoire tampon du côté de l'ordinateur personnel dans plusieurs tampons de résultat,
- un tampon de résultat occupé contient le numéro de programme associé à la tâche,
- s'il n'y a plus de tampon de résultat libre pour un résultat, on écrit sur un tampon de résultat occupé.

11. Procédé suivant la revendication 9, un raccordement (4) déjà présent pour une mémoire à disque ou une mémoire à disquette étant utilisé comme interface (3) parallèle du côté de l'ordinateur (1) à postes de travail multiples.
